# EUROPEAN PATENT APPLICATION

(11) **EP 4 764 589 A1**
(43) Date of publication of application: **24.06.2026**
(21) Application number: 24222513.4
(22) Date of filing: 20.12.2024
(51) Int. Cl.: G01S 7/00, G01S 13/42, G01S 13/10, G01S 13/34

(54) **RADAR**

(71) Applicant: Terma A/S, 8520 Lystrup (DK)
(72) Inventor: JOOST JENSEN, Lars, 8520 Lystrup (DK)
(74) Representative: Zacco Denmark A/S

(57) **Abstract**

A radar, a system and a method, comprising: a radar antenna (101); a frontend circuit (102) coupled to the radar antenna (101) and including one or more amplifiers; a first processor (103) coupled to the frontend circuit (102) and including: a synchronizer (110); a radar radio (117); and a data network interface (111) for communication via a data network (130). The radar radio (117) performs radar radio operations in correspondence with radar data synchronously transferred to the radar radio; wherein the radar data includes first radar data corresponding to first radar operations. The data network interface (120) includes: a first memory (114); a queuing circuit (113); and a dequeuing circuit (115) controlled via the synchronizer to synchronously transfer the first radar data from the dequeuing circuit (115) to the radar radio (117) for the radar radio (117) to perform the first radar operations corresponding with the first radar data.

## Description

The present disclosure relates generally to radars, such as radars for ground, air, and marine surveillance or tracking, and more specifically to radars operating at a repetition rate.

### INTRODUCTION

Radars for ground, air, and marine surveillance or tracking can often be recognized by a rotating antenna or a tracking antenna mounted to have a free view to a surveillance area to detect the range to and/or speed of objects in the surveillance area.

Radars are often configured to include a radar antenna, such as a rotating antenna or a tracking antenna emitting and/or receiving microwave signals e.g. in the X-band at 8 to 12 GHz or in the V-band at 40 to 75 GHz; a frontend circuit including one or more power amplifiers for transmission of radar transmit signals and/or an amplifier for reception of radar echo signals; and a processor configured to encode and/or decode timing information in the radar signals for the purpose of determining the range to and/or speed of objects in the surveillance area. The range to and/or speed of objects in the surveillance area is determined based on fast and accurate timing of radar signals. The processor is therefore configured to perform time-critical processing of the radar signals.

Radars for surveillance or tracking can include passive radars listening for incoming microwave signals or active radars transmitting transmit radar signals and receiving radar echo signals. Radars can include mono-static radars, using one antenna for transmit and receive phases or bistatic radars using separate antennas for transmit and receive phases. Radars can include time-multiplexed transmit and receive phases. Radars can include time-encoding or time-decoding to include or extract information in radar signals for determining range to and/or speed of a target.

The radar antenna should be installed at a position with a free view to the surveillance area e.g. at the top of a mast e.g. atop a building structure. However, it is conventionally not convenient to install the frontend and the processor at the top of a mast. Therefore, transmission lines between the radar antenna and the frontend and/or the processor becomes quite long and therefore includes significant transmission losses. The transmission lines conventionally include hollow metal tubes for transmission of high power radar signals.

The significant length of the waveguides involves significant transmission losses, which adds to the power demand of frontend hardware generating the radar pulses at microwave frequencies. Due to the required time-critical processing, the processor is required to be located within short distance of the frontend. The processor itself is furthermore configured for the time-critical processing and requires static task execution and close integration to avoid losing time-critical synchronization.

Different types of radars may operate with a repetition rate. As examples, radars operating with a repetition rate may include:
- Pulse radars, including radars configured for Doppler-shift measurements, pulse compression e.g. with linear frequency modulation, non-linear frequency modulation, and/or phase modulation.
- Frequency Modulated Continuous Wave (FMCW) Radars, including radars configured for pulse-shaped amplitude modulation of a transmitted radar signal and/or radars of the Frequency-Modulated Interrupted Continuous-Wave (FMiCW) type. Multiple-input multiple-output (MIMO) radars and phased array based radars are "examples of radars using both modulation schemes.

The radars operating with a repetition rate may include Synthetic Aperture Radars (SAR), which uses the motion of the radar antenna to create radar images and/or Phased Array Radars, which employs an array of antennas to steer a radar beam electronically without moving the antenna.

### SUMMARY

There is provided a radar, comprising:
a radar antenna (101);
a frontend circuit (102) coupled to the radar antenna (101) and including one or more amplifiers;
a first processor (103) coupled to the frontend circuit (102) and including: a synchronizer (110); a radar radio (117); and a data network interface (111) for communication via a data network (130);
wherein the radar radio (117) is configured to perform radar radio operations in correspondence with radar data synchronously transferred to the radar radio; wherein the radar data includes first radar data corresponding to first radar operations;
wherein the data network interface (120) includes:
   a first memory (114);
   a queuing circuit (113) configured to store, in the first memory (114), one or more input data items obtained from one or more input data packets received via the data network (130); wherein the one or more input data items include one or more first input data items; wherein the one or more first input data items include first radar data; and
   a dequeuing circuit (115) controlled via the synchronizer to synchronously retrieve the one or more input data items from the memory (114) and synchronously transfer the one or more input data items including the first radar data from the dequeuing circuit (115) to the radar radio (117) for the radar radio (117) to perform the radar operations corresponding with the first radar data.

An advantage is that radar operations are performed instantly in real time or near real time in correspondence with radar data transmitted to the first radar processor, e.g. from a remote location, without compromising time-critical processing at the radar. The aerial radiation of electromagnetic microwaves from the radar antenna can be changed via the data network.

An advantage is that radar operations corresponding to the radar data can be performed as defined by the radar data despite of variation or irregularities in arrival times of the one or more input data packets received via the data network.

An advantage is that the radar data dequeued from the first memory can be transferred to the radar radio without interruptions. This in turn has the advantage that radar operations including transmitting a radar signal via the radar antenna and the frontend can be performed without introducing interruption-induced distortions in a transmitted a radar signal. This enables complying with regulations and requirements related to radio noise.

An advantage is that the complexity of the first processor, which performs time-critical processing, can be reduced. Flexibility in terms of generating the radar data, providing user interface etc. is obtained e.g. by using a remote computer not performing time-critical processing but being configured to transmit the radar data fast enough.

An advantage is that the radar can be controlled, e.g. from a radar user interface remote from the radar antenna and remote from the first processor, rather than at or close to the radar antenna and the first processor. This is convenient e.g. since the radar antenna should be located at a position with a free view to the area, e.g. the sea, subject to surveillance.

Since the radar user interface can be located remotely from the radar antenna one or more of the following are enabled:
the frontend, the first processor and the radar antenna can be integrated e.g. into a unit mounted to the radar antenna;
the length of a transmission line and the transmission loss associated with the transmission line between the radar antenna and the frontend circuit can be significantly reduced;
the power demand to the frontend circuit can be reduced and its circuitry reduced since the frontend does not have to overcome the significant transmission loss associated with the length of conventional transmission line;
the cost of manufacturing the radar can be reduced;
processing of radar data can be changed prior to communicating the radar data to the radar via the data network without requiring changes to the (hardware) configuration of the first processor;

In some respects, the dequeuing circuit is controlled via the synchronizer to synchronously retrieve the one or more first input data items from the memory and synchronously transfer the one or more first input data items including the first radar data from the dequeuing circuit to the radar radio for the radar radio to perform the first radar operations corresponding with the first radar data in response to receiving the radar data. In some examples, in response to receiving the radar data is immediately after receiving the radar data, immediately after receiving the first data item, or immediately after receiving all data items included in the first radar data.

In some respects, the radar radio is stateless from one interval time to a subsequent interval time. The radar operations performed at any given interval time are determined by radar data corresponding to that given interval time. Radar data at interval times, not corresponding to that given interval time may be disregarded for the radar operations performed at the given interval time. Thereby, the radar radio, including the first processor, is simplified because the radar radio and the first processor is stateless. The hardware and/or software design can be more straightforward and efficient. Still, the radar radio can perform operations such as but not limited to: arithmetic operations (like addition and multiplication), filtering (using FIR filters), and transformations (like the Fourier Transform). These operations depend only on current input values. In particular, the radar radio and the first processor can be more efficient in terms of speed and resource usage, as they avoid the overhead associated with storing and retrieving past inputs and states. In some respects, the radar radio is configured to perform modulation and filtering.

In some respects, the radar radio operates to generate a response, such as an immediate response, to the radar data in the order the radar data arrives at the radar radio.

In some respects, the synchronizer generates the system clock signal from a clock signal generator included with the first processor.

In some respects, the radar radio is configured to synchronously receive or accept the radar data including the first radar radio data and correspondingly perform radar radio operations based on the radar radio data within an interval time that commences and/or ends in synchronism with the repetition clock signal.

In some respects, the radar radio is configured to synchronously receive the radar data including the first radar radio data and correspondingly perform radar radio operations based on the radar radio data within an interval time that commences and/or ends in synchronism with the repetition clock signal.

In some respects, the dequeuing circuit is controlled via the system clock signal and/or the repetition clock signal to synchronously retrieve the one or more first input data items from the first memory.

In some respects, the first processor is controlled via the system clock signal to synchronously transfer the first radar data from the dequeuing circuit to the radar radio. In some respects, the first processor is configured with an interconnect (internal bus) configured with a data width and transfer rate to transfer the radar data from the dequeuing circuit to the radar radio fast enough that the radar radio receives the radar in time to perform corresponding radar operations at each interval time. In some respects, the interconnect has a data width enabling transferring the radar data within one or more system clock cycles.

In some respects, the first memory, the queuing circuit, and the dequeuing circuit operates according to a First-In-First-Out (FIFO) principle. The first memory may be denoted a buffer memory. The first memory stores the input data items temporarily. In some examples, the processor includes a memory lock preventing simultaneously writing by the queuing circuit and reading by the dequeuing circuit.

In some examples, the data network includes a packet-switched data network such as the Internet. In some examples, the data network is a local area data network or a wide area data network e.g. in accordance with an Ethernet protocol.

In some examples, the data network interface receives input data packages at an irregular data rate. In some examples, the data network interface transmits output data packages at a regular rate corresponding with the pulse timing.

In some examples, the frontend includes one or more power amplifiers. In some examples, the power amplifiers are powered off, or not powered on, during radar operations e.g. for using the radar antenna for listening radar operations. In some examples, the frontend does not include a power amplifier.

In some examples, the radar includes multiple antennas, and/or the radar antenna includes multiple antenna elements.

There is also provided a system, comprising:
a radar according to any preceding claim;
a second processor (141) separate from the first processor (103);
wherein the second processor (141) is configured to generate the radar data including the first radar data; and
wherein the system includes a control computer (140) in communication with the second processor; wherein the control computer (140) and/or the second processor (141) is configured to communicate the radar data including the first radar data to the first processor (102) via the data network (130) and the memory (114).

An advantage is that the system is more flexible than a conventional radar.

An advantage is that the complexity of first processor is reduced by enabling radar operations conventionally performed by a highly specialized processor for time-critical processing to be taken over by a general-purpose computer including the control computer and/or the second processor. In some examples, the control computer is a general-purpose computer, and the second processor is configured with hardware acceleration of computations. The second processor is e.g. a Graphical Processing Unit (GPU).

In more detail, the radar data are communicated from the control computer and/or the second processor included in one or more data items included in one or more data packets communicated via the data network to the first processor.

In some respects, the radar data are communicated from the control computer and/or the second processor at a transmission rate fast enough that radar data arrive at the first processor at a repetition rate corresponding with the recurring interval times. Variations, such as expected or average variations, in the transmission rate may be smoothened out by means of the first memory. The size first memory, at the first processor, is preferably configured accordingly.

In some respects, the control computer and/or the second processor is programmed to generate the radar data e.g. including the control parameters and transmission data e.g. including transmit chirp values. Software for controlling the radar data e.g. including the control parameters and/or transmission data may be based on algorithms and parameters known in the art.

In some examples, the data network is a package-switched data network. The first processor and/or the control computer may be coupled to the data network via optical fibres.

There is also provided a method at a first processor (103) coupled to a radar antenna and including: a synchronizer (110); a radar radio (117); and a data network interface (111) including a memory (114); comprising:
receiving, via a packet-switched data network, in advance of a first interval time, one or more first input data packets;
storing, in the memory (114), one or more first data items including radar data including first radar data obtained from the one or more first input data packets; and
synchronously, retrieving the first radar data from the memory (114) and synchronously transferring the radar data including the first radar data from the memory (114) to the radar radio (117); and
at the radar radio, executing radar radio operations in correspondence with radar data synchronously transferred to the radar radio.

Some advantages are set out above.

### BRIEF DESCRIPTION OF THE FIGURES

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.
fig. 1 shows a system including a radar with a first processor coupled to a control computer with a second processor via a packet-switched data network;
fig. 2 shows a first timing diagram representing processing of radar data at the radar;
fig. 3 shows a second timing diagram including processing of radar data;
fig. 4 shows radar data at the radar radio and the frontend;
fig. 5 shows a third timing diagram with respect to an interval time;
fig. 6 shows a radar antenna and a motion controller;
fig. 7 shows a flowchart for a method at the first processor;
fig. 8 shows a flowchart for a method at a control computer;
fig. 9 shows a control computer and a second processor;
fig. 10 shows an application structure at a control computer; and
fig. 11 shows a radar antenna with an array of antenna elements.

### DETAILED DESCRIPTION

Aspects of the claimed subject-matter are described below, before reverting to the detailed description of the figures:
In some examples, the radar radio (117) is configured to perform the first radar operations including:
transmitting a first radar transmit signal via the radar antenna (101) and the frontend circuit (102) in correspondence with the first radar data, and/or
receiving a first radar echo signal via the radar antenna and the frontend circuit in correspondence with the first radar data.

An advantage is that the radar can be configured via the data network for one or both of transmission and reception in correspondence with the radar data received via the data network.

In some respects, the radio radar includes a digital signal processing circuit configured to generate and/or process a radar transmit signal or to process a radar echo signal based on digital signal processing.

In some respects, the radio radar includes a mixed-mode signal processing circuit configured to generate and/or process a radar transmit signal or to process a radar echo signal based on mixed analogue and digital signal processing.

In some respects, the radio radar includes an analogue signal processing circuit.

In some respects, a radar transmit signal, including the first radar transmit signal, and/or a radar echo signal, including the first radar echo signal, is/are microwave signals.

In some respects, the radar radio is configured to transmit a first radar transmit signal and/or receive a first radar echo signal, within the first interval time, in accordance with the synchronously received first radar radio data.

In some respects, the first processor is configured to transmit a series of radar pulses including a first radar pulse via the frontend circuit and the radar antenna in correspondence with the radar data.

In some respects, the radar radio includes one or more digital-to-analogue converters included in transmitting a radar signal from the radar radio.

In some respects, the radar radio includes one or more analogue-to-digital converters included in detecting a radar signal at the radar radio.

In some examples, the first processor communicates the radar data from the memory to the radar radio including temporary and synchronous data storage.

In some examples, the radar data includes control parameters; and wherein the radar radio (117) is configured to control:
transmission of a first radar transmit signal based on values included in the control parameters; and/or
detection of a first radar echo signal based on values included in the control parameters.

An advantage is that transmission and/or detection of a radar signal can be manipulated or adapted in near real-time from a remote location. This enables manipulating or adapting the radar signal without transmitting the radar signal to the radar radio via the data network. This in turn reduces the amount of data transferred from the remote location to the radar.

Examples of parameters included in the control parameters are:
- a gate length, controlling at which times, during the interval time, the radar radio to activates a power-on state of a power amplifier residing in the frontend circuit to transmit a radar transmit signal;
- a switch delay, controlling at which times, during the interval time, the radar radio switches from detecting a transmitted radar transmit signal to detecting a received radar echo signal;
- an acquisition time interval during which one or more analogue-to-digital converters detect radar signals via the radar antenna;
- a centre frequency of a radar signal, or a frequency range of a frequency-swept radar signal.

Other parameters can additionally or alternatively be included in the control parameters.

The acquisition time interval may be represented by a multibit value associated with a number of system clock pulses. The acquisition time interval may start at the beginning of a transmission and end after the transmission to include time for receiving an echo signal. The acquisition time interval may start and end without a transmission e.g. to define a listening time in connection with listening operations, not including transmissions (passive radar operations).

In some respects, the first radar transmit signal is represented in the radar data.

In some examples, the radar data includes one or more control parameters and/or transmission data; wherein the radar radio (117) is configured to perform the radar operations corresponding to the radar data for an interval time; wherein the duration of the interval time corresponds to the radar data and is determined based on: one or more of the control parameters and/or a transmission time associated with the transmission data.

An advantage is that the radar radio can perform the radar operations during interval times with a configurable duration and that the radar operations can be performed continuously throughout the interval time based on synchronously transferred data items.

In some examples, the first radar operations corresponding to one or more first data items are performed during a first interval time; wherein second radar operations corresponding to one or more second data items are performed during a second interval time after the first interval time; and
wherein the radar radio is configured to proceed to perform the second radar operations in response to beginning receiving the one or more second data items; and/or
wherein the radar radio is configured to perform the first radar operations in response to beginning receiving the one or more first data items.

An advantage is that the radar radio can be simplified to basically perform radar operations corresponding with currently received radar data without complex control systems e.g. for transmission scheduling etc.

In some examples, the second radar operations corresponding to one or more second data items are performed during a second interval time immediately after the first interval time.

In some examples, the second radar operations corresponding to one or more second data items are performed during a second interval time after the first interval time and a pause interval. In some respects, the pause interval corresponds with the dequeuing circuit waiting for the first memory to store all data items corresponding with the second radar operations.

In some examples, the first radar operations corresponding to one or more first data items are included in a first complete set of first data items and are performed during a first interval time;
wherein the dequeuing circuit (115) is configured to:
make a first determination that each first data item included in the first complete set of first data items is currently stored in the first memory (114); and
in response to the first determination, synchronously retrieving the one or more first data items included in the first complete set of first data items from the memory (114) and synchronously transfer the one or more first data items included in the first complete set of first data items including the first radar data from the dequeuing circuit (115) to the radar radio (117) for the radar radio (117) to perform the radar operations corresponding with the first radar data.

An advantage is that the dequeuing circuit transfers a complete set of data items for the first radar operations without interruptions. Consequently, a radar transmit signal can be transmitted from the radar antenna without distortions caused by such interruptions. This enables complying with regulations and requirements related to radio noise.

In some respects, the complete set of data items for the first radar operations include transmission data that can be transmitted in a radar signal without interruptions.

In some examples, each first data item includes a list identifying other first data items included in the complete set of first data items. The dequeuing circuit can determine that each first data item is included and that the first data items constitute a complete set of first data items. Alternatively, the dequeuing circuit can determine that that all data items in the complete set of first data items are currently stored in first memory. The dequeuing circuit may be configured to wait for a period of time and make a time-out determination e.g. cancelling transfer to the radar radio, in case the set of first data items is not rendered complete.

In some examples, the radar data includes transmission data; and wherein the radar radio (117) is configured to shape a signal waveform included in the first radar signal based on the transmission data.

An advantage is that the transmission data enables specific configuration of a radar transmission corresponding to the radar data including the transmission data.

An advantage is that the transmission data can be transferred from the memory via the dequeuing circuit to the radar radio without interruptions. Consequently, a radar transmit signal can be transmitted from the radar antenna without distortions caused by such interruptions. This enables complying with regulations and requirements related to radio noise.

In some respects, the transmission data includes time-domain values of the waveform shape included in a radar pulse. An advantage is that first processor receives time-domain values of the waveform shape that can be converted into a signal for formation of the radar transmit signal. In some examples, the time-domain values represent sample values of the waveform shape included in a radar pulse. In some examples, the time-domain values are denoted 'raw values' because they directly represent the shape of the waveform.

In some examples, the transmission data includes transmit chirp values. The transmit chirp values may correspond to a time-domain representation of the shape of a signal waveform included in the first radar signal.

In some examples the radar radio is configured to modify, e.g. via modulation, the transmit chirp values based on one or more control parameters e.g. including a centre frequency parameter.

In some examples, the frontend circuit (102) includes one or more of: one or more receive circuits; one or more transmit circuits; and one or more switches;
wherein the radar radio is configured to control the frontend circuit, including one or more of: one or more of the receive circuits; one or more of the transmit circuits; and one or more of the switches .

An advantage is that the frontend circuit, e.g. including a power amplifier, a preamplifier, and/or a switch can be controlled via the radar data and the radar radio.

An advantage is that the first processor can be configured for low-power signal processing, e.g. including digital signal processing and/or mixed-mode signal processing, whereas the frontend includes high-power signal processing e.g. including analogue signal processing. Yet, the frontend circuit can be controlled.

In some examples, the one or more switches is/are configured as a multiplexer e.g. controlling routing of radar signals at the frontend.

In some examples, the one or more switches is/are configured to change a power level and/or gain of one or more power amplifiers. In some examples, the one or more switches is/are configured to switch a power amplifier 'on' or 'off'.

In some examples, the first radar operations include transmitting a first radar transmit signal via the radar antenna (101) and the frontend circuit (102) in correspondence with the first radar data;
wherein the radar includes a power amplifier for transmitting a radar transmit signal; and
wherein the radar radio, based on a gate signal value included in the radar data, controls an operating time of the power amplifier.

An advantage is that the power amplifier can be switched off or brough to a low-power state during at least a portion of an interval time. Thereby electric noise generated by the power amplifier can be at least reduced during times when a radar echo signal is detected.

In some respects, the gate signal value represents a number of system clock pulses or other clock pulses representing sub-divisions of the interval time.

In some examples, the radar radio (117) is configured to perform the first radar operations including:
transmitting, within a first interval time, a first radar transmit signal via the radar antenna (101) and the frontend circuit (102) in correspondence with the first radar data, and
receiving, within the first interval time, a first radar echo signal via the radar antenna and the frontend circuit in correspondence with the first radar data;
wherein the radar includes one or more analogue-to-digital converters selectively detecting: a radar echo signal including a first radar echo signal and/or the radar transmit signal, including a first radar transmit signal;
wherein the radar radio, based on a switch delay value included in the radar data, selects detecting a radar echo signal including the first radar echo signal or selects detecting the radar transmit signal, including the first radar transmit signal.

An advantage is that one or both of the radar transmit signal, and the radar echo signal can be correspondingly detected via the one or more analogue-to-digital converters selectively detecting a radar echo signal and/or the radar transmit signal during the interval time. This is a particular advantage since the transmitted radar signals and the received echo signals have very different signal strengths.

In some respects, the switch delay value represents a number of system clock pulses or other clock pulses representing sub-divisions of the interval time.

In some examples, the radar data includes channel data associated with one or more radar antenna channel elements; and the radar antenna includes an array of antenna elements each coupled to the radar radio via the frontend for individually transmitting radar signals corresponding to the channels included in a radar transmit signal.

An advantage is that the transmit beam of the radar can be controlled in near real time.

In some respects, the channels included in a radar transmit signal are transmitted simultaneously via the antenna elements included in the radar antenna.

In some respects, the radar data includes a parameter representing the number of channels. In some respects, the channel data are organized to include information representing how channel data associated with more radar antenna channel elements correspond with the associated antenna channel elements.

In some examples, the radar is configured to detect microwave signals, via the radar antenna (101);
wherein the radar radio includes a converter configured to convert the detected microwave signals into echo values, including converting a first microwave echo signal into first echo values;
wherein the first processor (103) is configured to transfer the echo values from the radar radio to the data network interface (130); and
wherein the data network interface (130) is configured to communicate the echo values including the first echo values in one or more first output data items included in one or more first output data packets included in a sequence of output data packets to the data network.

An advantage is that the radar can communicate the echo values to an address on the data network. The address may coincide with or be different from the address of a computer communicating the radar data to the radar. This enables flexibility in configuration a system including the radar.

In some respects, the echo values including the first echo values are included in radar response data. The radar response data may include echo values and other values e.g. representing time or timing information related to reception and/or transmission of corresponding radar signals.

The echo values may include values detected at times overlapping with the radar transmitting of a radar signal. The echo values may additionally or alternatively include values detected at times not overlapping with the radar transmitting a radar signal, e.g. subsequently to a transmission to enable detection of a radar echo signal or in connection with listening-only (passive) radar operations.

In some respects, the converter includes an analogue-to-digital converter.

In some respects, the radar radio is configured to transfer the echo values from the radar radio to the data network interface within a corresponding interval time.

In some respects, as mentioned above, the data network may be a packed-based data network.

In some examples, the one or more first input data items include a first identifier value enabling identifying the one or more first data items in a sequence of data items including the first data items;
wherein the data network interface (120) is configured to obtain the first identifier value from the one or more first input data items and include the first identifier value (z) or a value corresponding with the first identifier value in the one or more first output data items included in one or more first output data packets.

An advantage is that the one or more first output data items are associated with corresponding input data items by means of an identifier value. The first identifier value is also denoted a "tag" or a "tag value". In some examples, the first identifier value included in the one or more first output data items is a copy of the first identifier value included in corresponding one or more first input data items.

An advantage is that input data items are efficiently and effectively associated with corresponding output data items. This is useful e.g. in connection with remote processing including the echo values and the (previously sent) radar data.

An advantage is that the association between the input data items and the output data items is robust to receiving data packets in another order than the order in which they were transmitted. This is important e.g. for creating a valid radar image based on the echo values and the radar data corresponding to the echo values.

In some respects, the first processor including the data network interface is configured to obtain identifier values in data items transmitted to the first processor; wherein the identifier values enable identifying one or more first data items in a sequence of data items; and wherein the first processor is configured to loop-back identifier values in data items transmitted to the control computer and/or the second processor.

In some examples, the radar includes a motion system (601) configured to rotate the radar antenna (101); wherein the first processor (103) is configured to obtain from the motion system (601) an azimuth value corresponding to a current orientation of the radar antenna (101); and wherein the first processor (103) is configured to include a value corresponding to the azimuth value in an output data package.

An advantage is that the azimuth value includes information for generating a radar image including orientation information (e.g. related to a compass orientation) from the echo values.

In some respects, the azimuth value is obtained from an azimuth encoder included in the motion system.

In some examples, the first processor (103) is configured to perform operations including the radar operations performed by the radar radio based on a static task schedule; and/or wherein the first processor (103) is configured to perform stateless processing.

An advantage is that operations performed by the first processor are executed at deterministic times. This ensures predictability and regularity in execution of the operations. In particular, time-critical processing to encode and/or decode time information for range determination can be performed.

An advantage is that the first processor can execute instructions with highly accurate and predictable timing related to tasks associated with transmit and receive operations including processing of the waveform-specific values. The first processor is thereby associated with a deterministic behaviour with consistent and repeatable performance. To meet such demands the first processor is highly specialized and developed for a specific radar antenna or use of the radar antenna.

In some examples, the first processor is a real-time processor without an operating system or with a real-time operating system (RTOS).

In some examples, the radio circuit and the data network interface is integrated on a first semiconductor substrate; wherein the synchronous transfer of the first radar data from the dequeuing circuit (115) to the radar radio (117) takes place via an on-chip interconnect.

An advantage is that the first processor can be configured for time-critical task execution at high speed. An advantage is that a deterministic processing behaviour with consistent and repeatable performance is enabled.

In some examples, the first processor is integrated on one or more Field Programmable Gate Array circuits and/or one or more Application Specific Integrated Circuits.

In some examples, the queuing circuit (113) is synchronized to the data network (140).

The queuing circuit thus adjusts its timing based on clock signal derived from data received from the data network rather than based on the pulse timing. Thus, the queuing circuit operates asynchronously with the pulse timing. Data packets may arrive at a rate that only on average is comparable to a rate associated with the pulse timing.

In some examples, the first processor (103) and/or the radar radio is configured to obtain a second value from the one or more input data items and perform at least a subset of the first radar operations repeatedly, a number of times determined from the second value.

An advantage is that the second value can program the first processor and/or the radar radio to synchronously repeat a radar pulse a number of times at corresponding interval times e.g. to make sure that the pulses are repeated with the same time interval. Another advantage is that the amount of radar data and thus data packages can be reduced.

In some respects, the dequeuing circuit is configured to synchronously repeat reading the one or more first input data items from the memory and transferring the first radar data from the dequeuing circuit to the radar radio for the radar radio to repeatedly perform, the first radar operations corresponding with the first radar data.

In some examples, the transmission data included in the radar data includes transmit chirp values. The transmit chirp values may correspond to a time-domain representation of the shape of a signal waveform included in the first radar signal. Accordingly, the second value specifies how many times the chirp should be transmitted. An advantage is that the radar is operable to repetitively radiate microwave pulses without requiring a corresponding repetition in data package transmissions via the wide area data network.

In some examples, the data network interface (120) is configured to:
determine, at a first point in time, a memory fill level corresponding to the number of data items stored in the memory (114) at the first point in time; and
communicate the memory fill level, determined at the first point in time, via the data network (140) to a remote processor (130).

An advantage is that the remote processor can obtain the memory fill level and adjust a data package transfer rate to avoid underflowing the memory and/or avoid overflowing the memory.

In some examples, the data network interface determines the memory fill level each time a data item is queued and each time a data item is dequeued from the memory.

In some examples, the data network interface includes a counter that is incremented on queuing a data item in the memory and is decremented on retrieving a data item from the memory.

In some examples, the first radar operations include:
transmitting a first radar transmit signal via the radar antenna (101) in correspondence with the first radar data;
receiving a first radar echo signal via the radar antenna in correspondence with the first radar data;
wherein the radar radio includes a converter configured to convert the first radar echo signal into first echo values;
wherein the first processor (103) is configured to transfer the first echo values from the radar radio to the data network interface (130);
wherein the first processor (103) is configured to generate one or more time-stamp values associated with transmitting the first radar transmit signal and associated with receiving the first radar echo signal; and
wherein the data network interface (130) is configured to communicate the first echo values and the one or more time-stamp values in one or more first output data items included in one or more first output data packets included in a sequence of output data packets to the data network.

An advantage is that Doppler-shift information is included in an output data package, which can be sent to a remote computer for processing.

In some examples, the first radar echo signal includes portions detected at times of transmitting the first radar transmit signal and portions detected at times immediately following transmitting the first radar transmit signal. One time-stamp value may then suffice to establish a time of a Doppler-shift. The Doppler-shift may be determined from the echo values e.g. based on a sample time and/or sample frequency associated with the echo values.

With respect to hardware elements of the radar antenna, in some respects, the radar antenna includes one or more slotted waveguides configured to radiate aerial electromagnetic microwaves into a space in front of the one or more slotted waveguides and to receive aerial electromagnetic microwaves arriving from a space in front of the one or more slotted waveguides. The radar antenna is coupled to the frontend via probe coupling (electric field) or loop coupling (magnetic field) for detection or induction of corresponding electromagnetic wave in the waveguide(s).

In some examples, the radar is configured to perform radar operations including:
pulse radar operations; and/or
pulse-Doppler radar operations; and/or
pulse compression; and/or
pulse compression with linear frequency modulation; and/or
pulse compression with non-linear frequency modulation; and/or
pulse compression with phase modulation.

For pulse radar operations, the radar typically includes a multiplexer ensuring that the frontend is engaged only alternately, at non-overlapping periods, in transmitting and receiving such that transmit phases and receive phases do not overlap. Thus, the frontend is not engaged in transmitting and receiving signals via the radar antenna at the same time. In some examples, a power amplifier in the frontend is switched off or silenced during receive phases.

In some examples, the radar is configured to perform radar operations including:
Frequency Modulated Continuous Wave (FMCW) radar operations; and/or
Frequency-Modulated Interrupted Continuous-Wave (FMiCW) radar operations;
Pulse-shaped amplitude modulation radar operations; and/or
Multiple-input multiple-output (MIMO) radar operations.

A radar radio configured for FMCW or FMiCW radar operations is also controlled in correspondence with radar data synchronously transferred to the radar radio.

There is also provided a system, comprising:
a radar according to any preceding claim;
a second processor (141) separate from the first processor (103);
wherein the second processor (141) is configured to generate the radar data including the first radar data; and
wherein the system includes a control computer (140) in communication with the second processor; wherein the control computer (140) and/or the second processor (141) is configured to communicate the radar data including the first radar data to the first processor (102) via the data network (130) and the memory (114).

An advantage is that the system is more flexible than a conventional radar.

An advantage is that the complexity of first processor is reduced by enabling radar operations conventionally performed by a highly specialized processor for time-critical processing to be taken over by a general-purpose computer including the control computer and/or the second processor. In some examples, the control computer is a general-purpose computer, and the second processor is configured with hardware acceleration of computations. The second processor is e.g. a Graphical Processing Unit (GPU).

In more detail, the radar data are communicated from the control computer and/or the second processor included in one or more data items included in one or more data packets communicated via the data network to the first processor.

In some respects, the radar data are communicated from the control computer and/or the second processor at a transmission rate fast enough that radar data arrive at the first processor at a repetition rate corresponding with the recurring interval times. Variations, such as expected or average variations, in the transmission rate may be smoothened out by means of the first memory. The size first memory, at the first processor, is preferably configured accordingly.

In some respects, the control computer and/or the second processor is programmed to generate the radar data e.g. including the control parameters and transmission data e.g. including transmit chirp values. Software for controlling the radar data e.g. including the control parameters and/or transmission data may be based on algorithms and parameters known in the art.

In some examples, the data network is a package-switched data network. The first processor and/or the control computer may be coupled to the data network via optical fibres.

In some examples, the control computer and/or the second processor are/is configured to include identifier values in data items transmitted to the first processor; wherein the identifier values enable identifying one or more first data items in a sequence of data items;
wherein the first processor is configured to loop-back identifier values in data items transmitted to the control computer and/or the second processor;
wherein the control computer and/or the second processor are/is configured to control a rate and/or timing of transmitting data items to the first processor based on the identifier values included in transmitted data items and based on the identifier values included in received data items.

An advantage is that the control computer and/or the second processor are/is enabled to control transmission rate and/or timing to avoid overrun or underrun in the first memory.

In some respects, control computer and/or the second processor are/is configured to determine a current number of transmitted data items for which no identifier values has yet been looped back. The current number of transmitted data items for which no identifier values has yet been looped back may correspond to a fill level at the first memory.

In some respects, the control computer and/or the second processor is configured with a value representing the size of the first memory. In some respects, the transmission rate and/or timing of transmission is controlled to slow or pause transmission to the first processor in response determining that that the current number of transmitted data items for which no identifier values has yet been looped back exceeds a threshold value and/or approaches the size of the first memory. The threshold value may correspond to a fill level of the first memory, e.g. a threshold value at 50% or 80% of the size of the first memory.

Alternatively or additionally, the first processor including the data network interface (120) is configured to: determine a memory fill level corresponding to a difference between the number of data items stored in the memory (114) by the queuing circuit (113) and the number of data items dequeued from the memory (114) by the dequeuing circuit (115); and communicate the memory fill level via the data network (140) to the second processor (130); wherein the second processor (130) is configured to: obtain the memory fill level from a packet received from the first processor (103); and based on the obtained memory fill level, control timing of transmission of data packets communicated to the first processor (103). An advantage is that second processor can control timing of transmission of data packets e.g. by transmitting packets with a timing that keeps the memory fill level within a predefined range.

In some examples the identifier values are multibit counter values, e.g. time stamps, generated at the control computer and/or the second processor.

In some examples, the system comprises a data store integrated in communication with the data network interface; wherein output data packets include time information and/or timing information; and wherein the output data packets are stored in the data store.

An advantage is that the data store provides a back-up facility for radar echo data associated with time information enabling subsequent analysis, e.g. including rendering of radar images, based on the radar echo data.

In some respects the data store includes or is combined with a data network interface for communication via the data network.

In some respects, the data store is located at the radar, at the control computer, at a data centre or at another location.

In some examples, the control computer includes a data network interface, a central processing unit, a memory, and a user interface; wherein the control computer is loaded with an operating system and a radar application configured to generate radar data and/or analyse radar echo values.

An advantage is enabling that the radar can be controlled from the control computer, e.g. a general-purpose computer, with a user interface. The user interface may be configured with input means that are dedicated to interacting with the radar application configured to generate radar data and/or analyse radar echo values.

In some respects, the control computer is coupled with the second processor via a data bus, e.g. a high-speed data bus, e.g. a PCI bus.

In some examples, the control computer is coupled with the second processor to control the second processor to communicate the data packets, including the radar data, to the first processor; wherein the control computer is coupled to the second processor via a data network.

An advantage is that the second processor can be located at another location than the control computer. In some respects, the second processor is located at a data centre.

In some examples, the control computer and/or the second processor are/is based on a dynamic task schedule and runs a software-based operating system.

The computer includes a dynamic task schedule and enables execution of processing tasks involving execution of concurrent tasks on commercially available computing hardware.

In some examples, the system includes multiple radars according to any claim 1-22; wherein the control computer and/or the second processor is configured to communicate radar data and/or radar response data with one or more of the multiple radars.

Advantages are presented above and include improved flexibility while improving or at least without compromising user-interaction with the pulse radar and improved efficiency e.g. due to reduced transmission losses at microwave frequencies.

In some examples, the computer running the program configured to communicate the waveform-specific transmit values, communicates the waveform-specific transmit values in one or more data packets via the data network at a rate that corresponds to the rate of transmission of the radar pulses. For instance, the first processor transmits a series of radar pulses including the first radar pulse at a pulse repetition frequency (PRF) e.g. at 5 KHz; correspondingly, the computer communicates the waveform-specific transmit values in one or more data packets via the data network at a rate of about 5KHz. Other pulse repetition frequencies are in the range from about 3 KHz to about 30 KHz.

In some examples, multiple control computers communicate with the radar according to any claim 1-22.

Reverting to the detailed description of the figures:

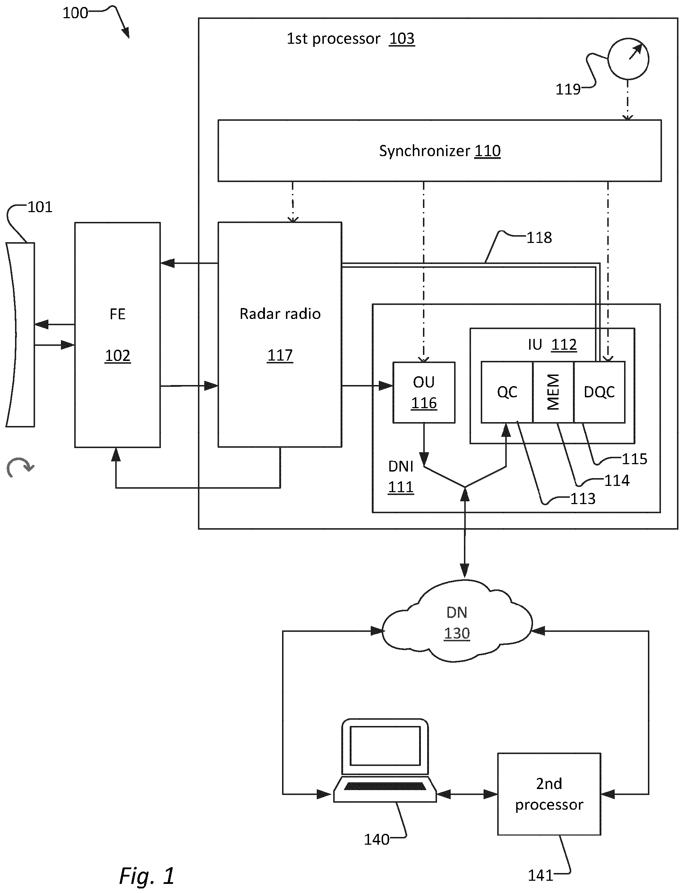

Fig. 1 shows a system including a radar with a first processor coupled to a control computer with a second processor via a packet-switched data network. The radar 100 comprises a radar antenna 101, e.g. a rotating radar antenna, coupled to a frontend circuit 102 including power electronics e.g. one or more power amplifiers. The frontend circuit 102 is coupled to a first processor 103 which includes circuitry for time-critical processing of radar signals for transmission via the radar antenna and/or for time-critical processing of radar signals received via the radar antenna. The first processor 103 includes a synchronizer 110; a radar radio 117; and a data network interface 111 for communication via a data network 130.

The radar radio 117 is controlled via the synchronizer 110 to perform radar radio operations in correspondence with radar data synchronously transferred to the radar radio. The radar radio 117 is configured to synchronously receive or accept radar data and correspondingly perform radar radio operations based on the radar radio data within an interval time that commences and/or ends in synchronism with the repetition clock signal. In some examples the radar radio 117 is stateless from one interval time to a subsequent interval time. The radar operations performed at any given interval time are determined by radar data corresponding to that given interval time. Thereby, the radar radio, including the first processor, is simplified. The hardware and/or software design of the radar radio can be straightforward and efficient.

The synchronizer 110 generates a repetition clock signal controlling timing of the interval times. The frequency of the interval times may be denoted a repetition frequency. The synchronizer 110 generates a system clock signal, wherein the repetition clock signal is synchronous with the system clock signal but at a lower rate. The synchronizer generates the repetition clock signal and/or the system clock signal from a clock signal generator 119 included with the first processor. The repetition clock signal and the system clock signal are shown by dashed lines.

The radar radio 117 is controlled via the radar data received from the data network interface 120. The data network interface 120 includes a first memory 114, a queuing circuit 113, and a dequeuing circuit 115. The first memory 114, the queuing circuit 113, and the dequeuing circuit 115 may be included in an input unit 112. The data network interface 120 operates to provide radar data to the radar radio in near real-time. Therefore, the radar radio 117, the synchronizer 110, and the data network interface 111 are conveniently integrated in a processor configured for time-critical processing such as an FPGA processor.

The radar data are communicated to the radar via the data network 130 e.g. a packet-switched data network. The queuing circuit 113 is configured to store, in the first memory 114, one or more input data items obtained from one or more input data packets received via the data network 130. The radar data are included in one or more input data items included in one or more data packets. In some examples, radar data corresponding to an interval time can be contained in a single data packet, however it may be necessary to include radar data corresponding to an interval time in multiple data packets. The queuing circuit 113 may be phase-locked to data arriving from the data network.

The dequeuing circuit 115 is controlled via the synchronizer 110 to synchronously retrieve the one or more input data items from the memory 114 and transfer the first radar data from the dequeuing circuit 115 to the radar radio 117 for the radar radio 117 to perform corresponding first radar operations within a corresponding interval time. The first processor including the dequeuing circuit 115 operates to timely and synchronously deliver radar data to the radar radio without interruptions or conflicting processing internally in the first processor.

The dequeuing circuit is controlled via the system clock signal and/or the repetition clock signal to synchronously retrieve the one or more input data items from the first memory. The radar data may be transferred e.g. in time with the system clock signal. The first processor is configured with an interconnect (internal bus) 118 configured with a data width and transfer rate to transfer the radar data from the dequeuing circuit to the radar radio fast enough that the radar radio receives the radar in time to perform corresponding radar operations at each interval time. In some respects, the interconnect has a data width enabling transferring the radar data within one or more system clock cycles.

The first memory 114 may have a data width capable of storing one or more data items. The data width may be in the range of hundreds to thousands of bits. The processor may include a memory lock preventing simultaneously writing by the queuing circuit and reading by the dequeuing circuit.

In some examples, the data network includes a packet-switched data network such as the Internet. In some examples, the data network is a local area data network or a wide area data network e.g. in accordance with an Ethernet protocol.

The system 100 also includes a second processor 141 separate from the first processor 103 and a control computer 140 in communication with the second processor 141. The second processor 141 is configured to generate the radar data. The control computer 140 and/or the second processor 141 is/are configured to communicate the radar data to the first processor 102 via the data network 130 and the memory 114.

The radar data may include control parameters and/or transmission data for the radar radio 117. The radar radio is configured to control transmission of a radar transmit signal based on values included in the control parameters; and/or detection of a radar signal, such as a radar echo signal, based on values included in the control parameters. A radar signal may be detected at times overlapping with the radar radio transmitting a radar signal and/or at times, listening to a radar echo signal, not overlapping with the radar radio transmitting a radar signal.

The radar data may alternatively or additionally include transmission data. The radar radio 117 is configured to shape a radar signal waveform based on the transmission data included in the radar data. In some examples, the transmission data include transmit chirp values. The transmit chirp values may correspond to a time-domain representation of the shape of a signal waveform included in the first radar signal. In some examples the radar radio is configured to modify, e.g. via modulation, filtering, decimation, up-sampling or downsampling, the transmit chirp values based on one or more control parameters e.g. including a centre frequency parameter.

In some embodiments, the radar is configured to detect microwave signals, via the radar antenna 101 and the frontend circuit 102, and convert the detected microwave signals into echo values. The first processor 103 may include an output unit 116 configured to transfer the echo values from the radar radio to the data network interface 130. The output unit 116 is configured to communicate the echo values including the first echo values in one or more first output data items included in one or more first output data packets included in a sequence of output data packets to the data network.

The synchronizer 110 may include a multibit (e.g. a 16-bit or 32-bit counter) supplying time-stamp values to the radar radio. The radar radio may include the time-stamp values in radar response data, e.g. in one or more output data items, e.g. corresponding with a time-stamp value at a time when the radar radio 117 begins acquisition or detection of radar echo signals.

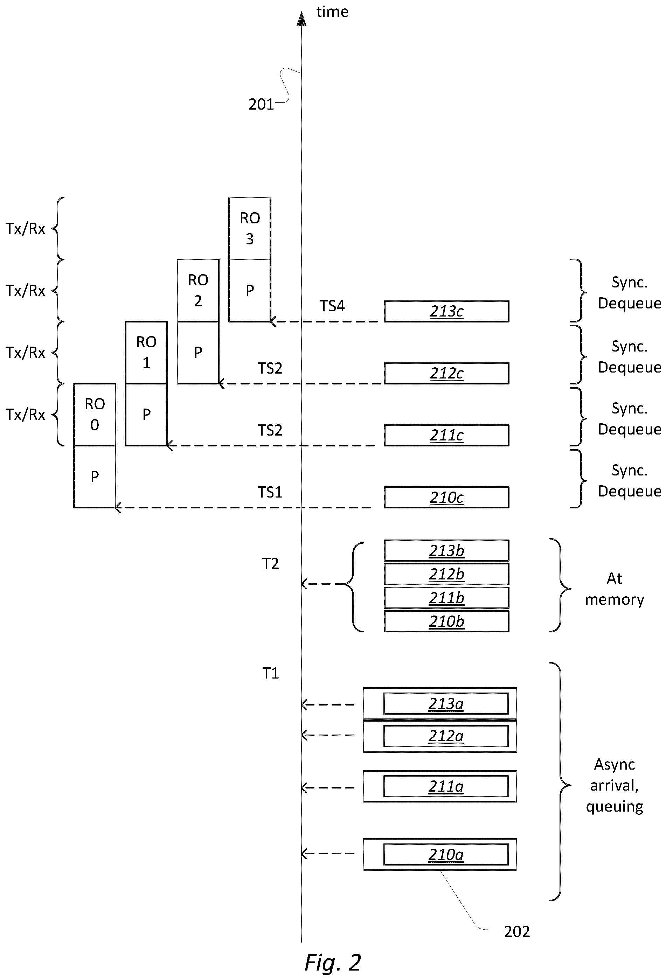

Fig. 2 shows a first timing diagram representing processing of radar data at the radar. The first timing diagram includes a vertical time axis. It is illustrated that data packets generally designated 202 arrives asynchronously at the data network interface 111 in particular at the queuing circuit 113 at times before time T1. The data packets therefore arrive non-periodically, at random times. The data packets 202 include data items designated 210a, 211a, 212a, and 213a. Here, letter 'a' designates the data items at arrival at the queuing circuit 113.

At a later time, T2, the data items 210b, 211b, 212b, and 213b (previously designated by letter 'a'), are stored in the memory 114 via the queuing circuit 113.

At yet later times TS1, TS2, TS3, and TS4 the data items 21 0c, 211c, 212c, and 213c (previously designated by letters 'a' and `b') are each synchronously dequeued from the memory 114 via the dequeuing circuit 115. The times TS1, TS2, TS3, and TS4 may occur at non-equidistant times or in some examples at equidistant times. Interval times between the TS1, TS2, TS3, and TS4 may have durations corresponding to the radar data corresponding to the radar operations performed at the interval times.

The radar radio 117 operates in accordance with the respective data items to perform radar operations designated RO0, RO1, RO2, and RO3 during corresponding interval times.

It is shown that interval times are designated by capital letter `P' prior to the radar operations designated RO0, RO1, RO2, and RO3. These interval times represents that the radar radio at least in some examples, operates to prepare radar operations for an upcoming interval time based on radar date from a current interval time, while concurrently operating according to the radar data from a previous interval time. The radar radio may thus perform operations in parallel.

Preparing the radar operations by the radar radio may include accepting radar data being transferred from the dequeuing circuit. In some examples however, the radar data are transferred to the radar radio so quickly that a full interval time is not needed. In some examples the radar radio can work sequentially to accept radar data and perform the radar operations correspondingly e.g. at the beginning of an interval time.

In some examples, the data items 210c, 211c, 212c, and 213c each include data that are synchronously dequeued from the memory 114 via the dequeuing circuit 115. Thus, each data item 210c, 211c, 212c, and 213c may require multiple system clock cycles to be transferred from the dequeuing circuit to the radar radio.

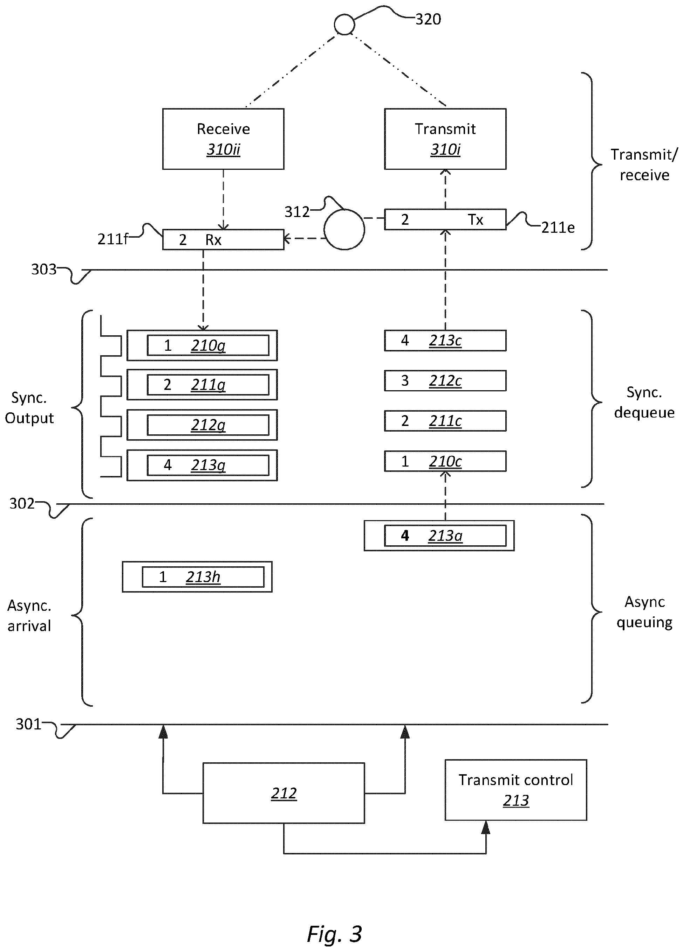

Fig. 3 shows a second timing diagram including processing of radar data. The figure illustrates that a tag value can be inserted in data items at a control computer, the first processor can loop back the tag value in a response data item corresponding to the data item received from the control computer. The response data item may additionally include the time-stamp value described above.

The lines 301, 302 and 303 represents interfaces. Line 301 represents an interface between the control computer 140 and the data network 130. Line 302 represents an interface between synchronous processing at the first processor and the data network 130. Line 303 represents an interface between the radar radio 117 and the data network interface 111.

On the lefthand side, the working principle described with reference to fig. 2 is shown. Further, the control computer 140 includes an identifier value sometimes denoted a `tag', enabling identifying each data item in a sequence of data items. Here, a most recently transmitted data item includes the identifier value `4' representing that it is the fourth data item transmitted. Another data item includes the identifier value '2'.

The radar radio 117 performs radar operations designated 310i (including radar signal transmissions) in correspondence with radar data included in the data item 211e and radar operations designated 310ii (including radar signal detections), e.g. including echo signals received from a remote object 320, in correspondence with radar data included in the data item 211e. Response radar data, including echo values, are included in a data item 211f.

In particular, the radar radio loops back the identifier value, here identifier value '2' via a processing step 312 at the radar radio. The radar radio may also loop back other data than the identifier value.

The data item 211f may thus include echo values e.g. detected during transmission of a radar signal and/or detected immediately following transmission of a radar signal. The data items 210g through 213g are generated in the same way and synchronously output to the data network interface for transmission via the data network.

At the control computer the data items are received. Here it is shown that the data item designated 213h arrives as the first data item following transmission of the fourth data item 213a.

The control computer can thereby determine that data items with identifier values 1, 2, 3 and 4 respectively included in data items 210, 211, 212 and 213 (letters excluded here) were transmitted from the control computer and keep track of the identifier values in correspondingly received data items. As shown, when data item 213h with identifier value '1' is reived, the control computer can determine that three data items are in a transmission loop including the radar radio - or lost on the data network.

The control computer can accordingly control the transmission rate and/or transmission timing of data items to the first processor. Alternatively, the control computer can increment and decrement a counter that is incremented on transmitting a data item and is decremented on receiving a data item.

The control computer can include a mechanism to detect and handle lost data items.

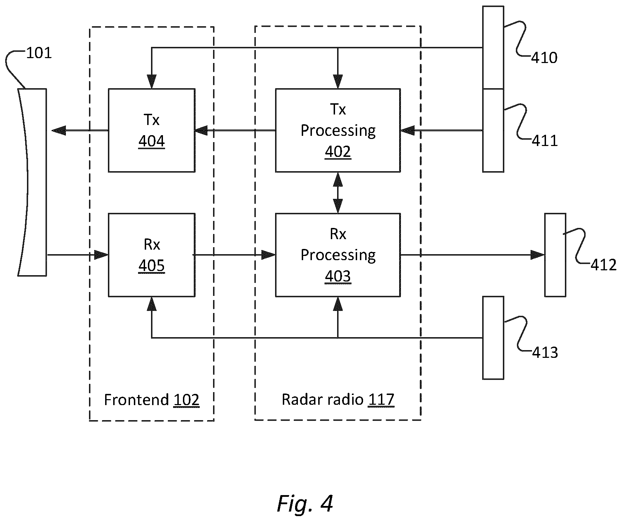

Fig. 4 shows radar data at the radar radio and the frontend. In some examples, the radar data includes a first data item 410 which includes control parameters controlling a transmitter 402 at the radar radio and/or a transmitter 404 at the frontend 102.

In some examples, the radar data includes a second data item 413 which includes control parameters controlling a receiver 403 at the radar radio and/or a receiver 405 at the frontend 102.

In some examples, the radar data includes a third data item 411 which includes transmit data for transmission and/or processing for transmission via the radar radio. The transmission data may include transmit chirp values. The transmit chirp values may correspond to a time-domain representation of the shape of a signal waveform included in the first radar signal. In some examples the radar radio is configured to modify, e.g. via modulation e.g. based on control data, the transmit chirp values based on one or more control parameters e.g. including a centre frequency parameter.

It is also shown that data detected by the radar radio in response to receiving a radar signal via the receiver 403 at the radar radio and the receiver 405 at the frontend 102 is output in an output data item 412.

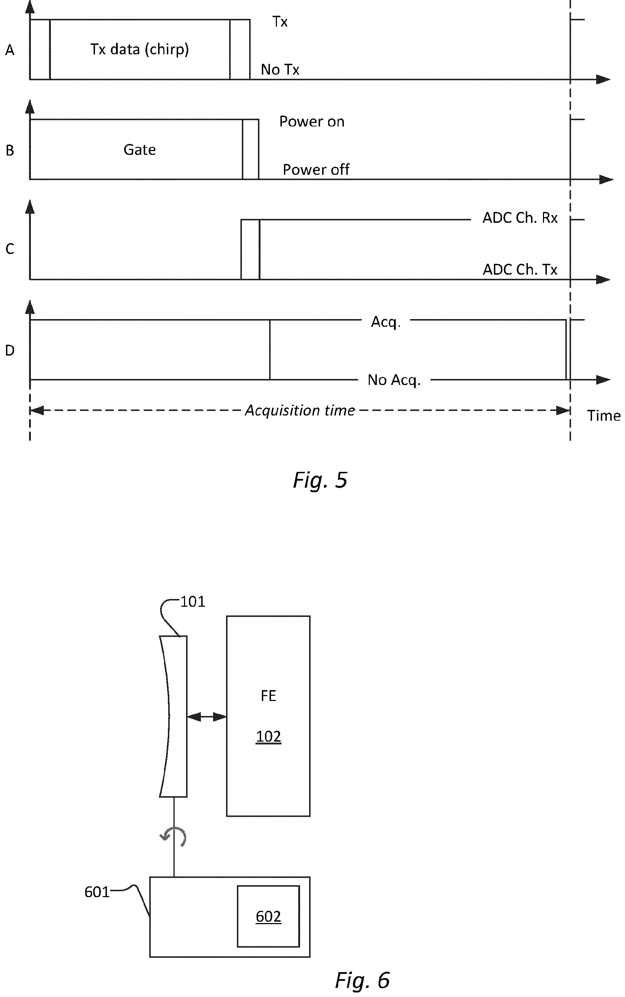

Fig. 5 shows a third timing diagram with respect to an interval time. The third timing diagram includes four sub-diagrams A, B, C, and D.

Sub-diagram A illustrates the duration of transmit data including a transmit chirp. It is shown that the transmit data may be padded by non-significant values in the beginning and/or end of chirp. The duration of the transmit data may correspond to a number of samples e.g. for each of multiple transmit channels.

Sub-diagram B illustrates a control parameter including a gate length, controlling at which times, during the interval time, the radar radio activates a power-on state of a power amplifier residing in the frontend circuit to transmit a radar transmit signal.

Sub-diagram C illustrates a control parameter including a switch delay, controlling at which times, during the interval time, the radar radio switches from detecting a transmitted radar transmit signal to detecting a received radar echo signal.

Sub-diagram D illustrates the duration of an acquisition time interval during which one or more analogue-to-digital converters acquire radar signals via the radar antenna.

In some examples, related to first radar data, the radar radio completes the radar radio operations at the end of the acquisition time or has completed the radar radio operations immediately following the end of the acquisition time. The radar radio is then immediately ready to accept a next set of one or more data items to perform radar radio operations corresponding with a second set of radar data.

Other control parameters may include e.g. a centre frequency of a radar signal, or a frequency range of a frequency-swept radar signal. Such control parameters may remain fixed or constant across the interval time. Other control parameters may represent variations across the interval time.

Fig. 6 shows a radar antenna and a motion controller. The radar antenna is mounted with a motion system 601 configured to rotate the radar antenna 101. The first processor 103 is configured to obtain an azimuth value corresponding to a current orientation of the radar antenna 101 from an azimuth encoder 602 included in the motion system.

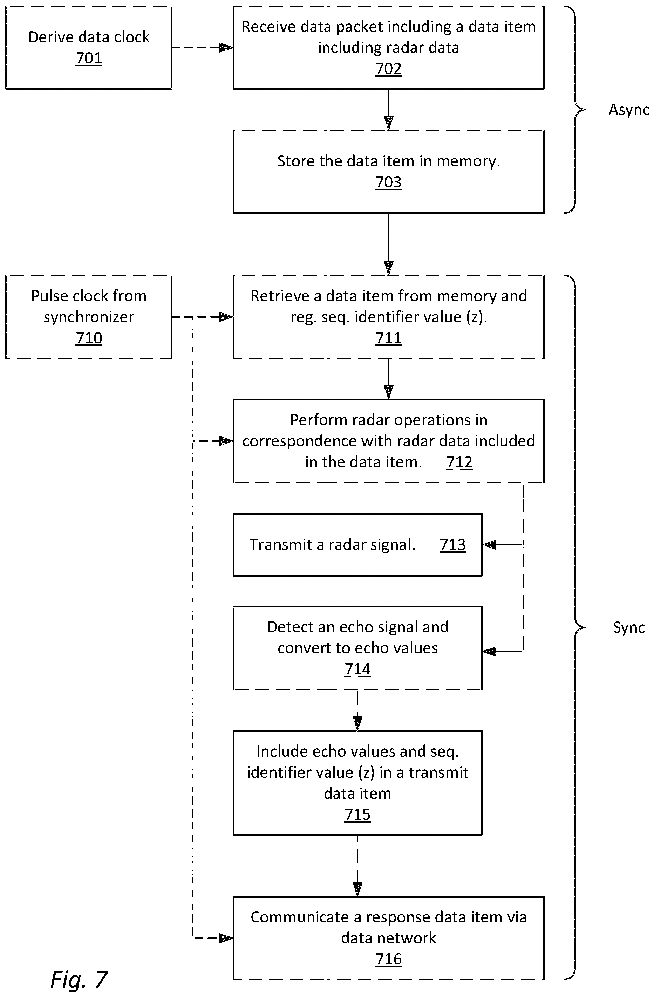

Fig. 7 shows a flowchart for a method at the first processor. The method comprises step 702 including receiving, via the data network 130, one or more first input data packets including radar data; and step 703 including storing, in the memory 114, one or more first data items including radar data including first radar data obtained from the one or more first input data packets. Steps 702 and 703 are performed based on a clock signal derived in step 701 from the data received via the data network. Steps 702 and 703 are performed asynchronously or out-of-synchronism with a repetition rate or a system clock.

The method further comprises step 710 including generating a repetition clock signal or a system clock signal from which the repetition clock signal can be derived. Based on data items stored in step 703, the method comprises step 711 including synchronously, retrieving the first radar data from the memory 114 and synchronously transferring the radar data including the first radar data from the memory (114) to the radar radio (117). The method comprises step 712 including, at the radar radio 117, executing radar radio operations in correspondence with radar data synchronously transferred to the radar radio.

In some embodiments, the method comprises step 713 and/or step 714. Step 713 includes transmitting a first radar transmit signal via the radar antenna 101 and the frontend circuit 102 in correspondence with the first radar data. Step 714 includes receiving a first radar echo signal via the radar antenna and the frontend circuit in correspondence with the first radar data.

In some embodiments, the method comprises step 715 including: converting the microwave echo signals into echo values, including converting a first microwave echo signal into first echo values and transferring the echo values from the radar radio to the data network interface (130). The radar is configured to detect the microwave echo signals, via the radar antenna 101 and the frontend circuit 102.

The method comprises step 716 including communicating the echo values in one or more first output data items included in one or more first output data packets included in a sequence of output data packets to the data network. In some embodiments, step 716 includes communicating one or more first output data packets to an address on the data network e.g. to an address associated with the control computer and/or the second processor.

In some embodiments, the method comprises determining a phase-difference measurement value based on a system clock; wherein the phase-difference measurement value represents a Doppler-shift associated with the echo pulse; and communicating the phase-difference measurement value in an output data item.

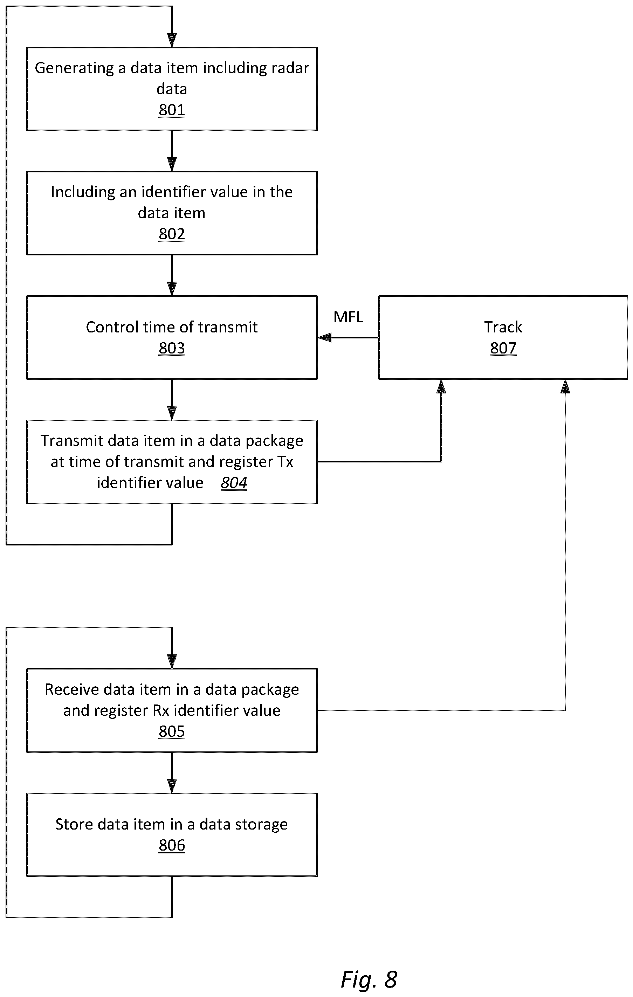

Fig. 8 shows a flowchart for a method at the control computer. The method comprises step 801 including generating one or more data items including radar data. At step 802 the control computer 140 and/or the second processor 141 includes identifier values in data items transmitted to the first processor 103. The identifier values enable identifying one or more first data items in a sequence of data items. At step 803 transmission time and/or rate of transmission related to transmission of data items is determined based on an estimated memory fill level, MFL. The method also comprises step 804 including transmitting the data items in accordance with the determined transmission time and/or rate of transmission.

As mentioned above, the first processor 103 is configured to loop-back identifier values in data items transmitted to the control computer and/or the second processor.

The method comprises step 805 including receiving data items from the first processor and step 806 including storing data items in a data storage.

The method comprises step 807 which determines the estimated memory fill level, MFL, based on tracking identifier values in transmitted data items and identifier values in received data items.

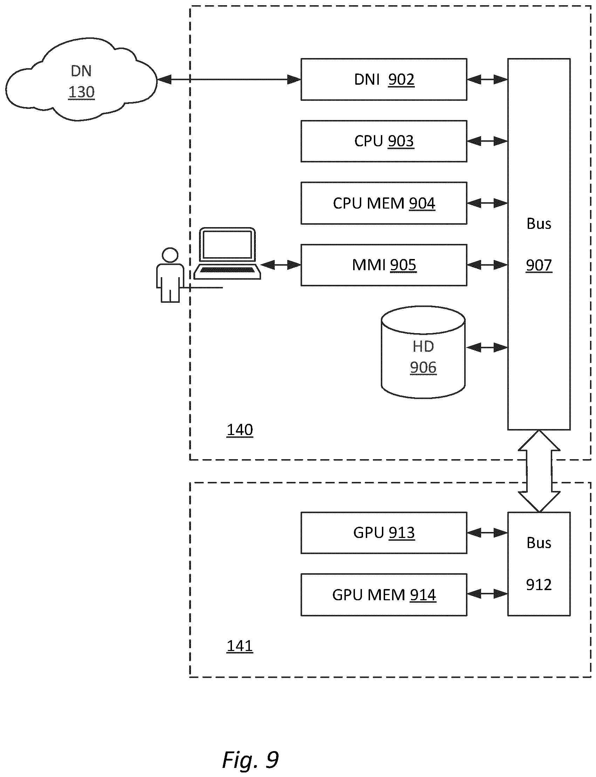

Fig. 9 shows a control computer and a second processor. The control computer 140 includes a data but 907 interconnecting a data network interface 902, one or more central processing units, CPUs, 907 with one or more processing cores, a CPU memory 904, a man-machine interface 905 including one or more input units, e.g. a keyboard, and one or more output units, e.g. a display, and a storage drive 906. The data network interface provides communication via the data network 130.

The data bus may be extended to or or interconnected with a data bus 912 at the second processor 141. The second processor 141 includes a Graphical Processing Unit, GPU, 913 and GPU memory 914. The Graphical Processing Unit may include hardware accelerated processing units to perform specialized computing operations. The second processor 141 may additionally or alternatively include one or more CPUs, FPGAs, and/or ASICS.

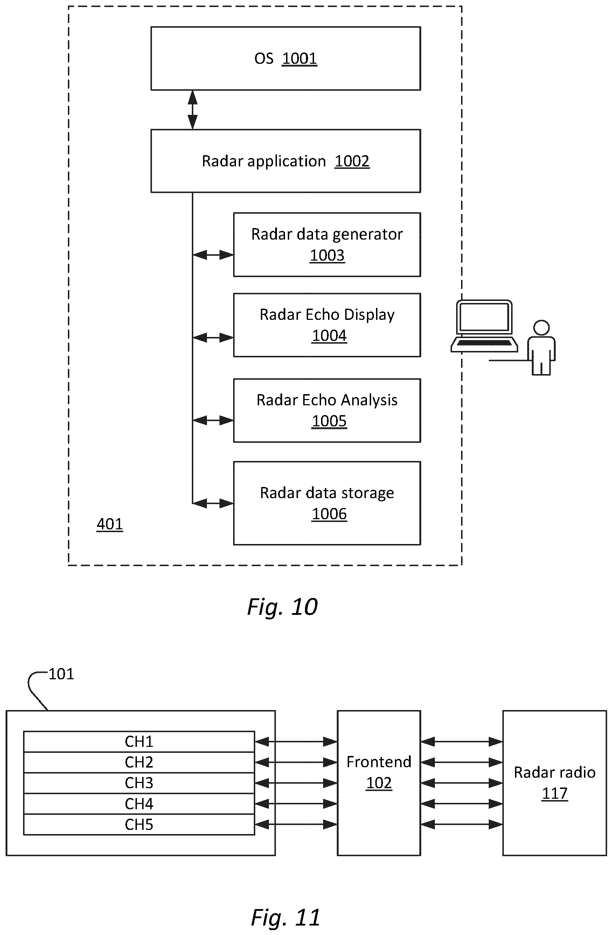

Fig. 10 shows an application structure at a control computer. The control computer 140 includes an operating system, OS, 1001 for running a radar software application 1002. The radar software application includes:
- a radar data generator component 1003 configured to generate radar data;
- a radar echo display component 1004 configured to display radar response data including echo data;
- a radar echo analysis component 1005 configured to perform analysis of radar response data including echo data; and
- a radar data storage component 1006 configured to store radar response data including echo data.

Fig. 11 shows a radar antenna with an array of antenna elements. The radar antenna 101 includes an array of multiple antenna elements designated CH1, CH2, CH3, CH4 and CH5. Each antenna element is coupled to the radar radio 117 via the frontend 102 for individually transmitting radar signals corresponding to respective channels included in the radar data. An advantage is that the transmit beam of the radar can be controlled in near real time. In some examples, the channels included in a radar transmit signal are transmitted simultaneously via the antenna elements included in the radar antenna.

### ITEMS

Examples of a radar, methods at a radar, a system including one or more radars, and a processor are set out in the items below:
1. A radar, comprising:
   a radar antenna (101);
   a frontend circuit (102) coupled to the radar antenna (101) and including one or more amplifiers;
   a first processor (103) coupled to the frontend circuit (102) and including: a synchronizer (110); a radar radio (117); and a data network interface (111) for communication via a data network (130);
   wherein the radar radio (117) is configured to perform radar radio operations in correspondence with radar data synchronously transferred to the radar radio; wherein the radar data includes first radar data corresponding to first radar operations;
   wherein the data network interface (120) includes:
      a first memory (114);
      a queuing circuit (113) configured to store, in the first memory (114), one or more input data items obtained from one or more input data packets received via the data network (130); wherein the one or more input data items include one or more first input data items; wherein the one or more first input data items include first radar data; and
      a dequeuing circuit (115) controlled via the synchronizer to synchronously retrieve the one or more input data items from the memory (114) and synchronously transfer the one or more input data items including the first radar data from the dequeuing circuit (115) to the radar radio (117) for the radar radio (117) to perform the radar operations corresponding with the first radar data.
2. A radar according to any preceding item, wherein the radar radio (117) is configured to perform the first radar operations including:
   transmitting a first radar transmit signal via the radar antenna (101) and the frontend circuit (102) in correspondence with the first radar data, and/or
   receiving a first radar echo signal via the radar antenna and the frontend circuit in correspondence with the first radar data.
3. A radar according to any preceding item, wherein the radar data includes control parameters; and wherein the radar radio (117) is configured to control:
   transmission of a first radar transmit signal based on values included in the control parameters; and/or
   detection of a first radar echo signal based on values included in the control parameters.
4. A radar according to any preceding item, wherein the radar data includes one or more control parameters and/or transmission data; wherein the radar radio (117) is configured to perform the radar operations corresponding to the radar data for an interval time; wherein the duration of the interval time corresponds to the radar data and is determined based on: one or more of the control parameters and/or a transmission time associated with the transmission data.
5. A radar according to any preceding item, wherein the first radar operations corresponding to one or more first data items are performed during a first interval time; wherein second radar operations corresponding to one or more second data items are performed during a second interval time after the first interval time; and
   wherein the radar radio is configured to proceed to perform the second radar operations in response to beginning receiving the one or more second data items; and/or
   wherein the radar radio is configured to perform the first radar operations in response to beginning receiving the one or more first data items.
6. A radar according to any preceding item, wherein the first radar operations corresponding to one or more first data items are included in a first complete set of first data items and are performed during a first interval time;
   wherein the dequeuing circuit (115) is configured to:
   make a first determination that each first data item included in the first complete set of first data items is currently stored in the first memory (114); and
   in response to the first determination, synchronously retrieving the one or more first data items included in the first complete set of first data items from the memory (114) and synchronously transfer the one or more first data items included in the first complete set of first data items including the first radar data from the dequeuing circuit (115) to the radar radio (117) for the radar radio (117) to perform the radar operations corresponding with the first radar data.
7. A radar according to any preceding claim, wherein the radar data includes transmission data; and wherein the radar radio (117) is configured to shape a signal waveform included in the first radar signal based on the transmission data.
8. A radar according to any preceding item, wherein frontend circuit (102) includes one or more of: one or more receive circuits; one or more transmit circuits; and one or more switches;
   wherein the radar radio is configured to control the frontend circuit, including one or more of: one or more of the receive circuits; one or more of the transmit circuits; and one or more of the switches .
9. A radar according to any preceding item, wherein the first radar operations include transmitting a first radar transmit signal via the radar antenna (101) and the frontend circuit (102) in correspondence with the first radar data;
   wherein the radar includes a power amplifier for transmitting a radar transmit signal; and
   wherein the radar radio, based on a gate signal value included in the radar data, controls an operating time of the power amplifier.
10. A radar according to any preceding item, wherein the radar radio (117) is configured to perform the first radar operations including:
   transmitting, within a first interval time, a first radar transmit signal via the radar antenna (101) and the frontend circuit (102) in correspondence with the first radar data, and
   receiving, within the first interval time, a first radar echo signal via the radar antenna and the frontend circuit in correspondence with the first radar data;
   wherein the radar includes one or more analogue-to-digital converters selectively detecting: a radar echo signal including a first radar echo signal and/or the radar transmit signal, including a first radar transmit signal;
   wherein the radar radio, based on a switch delay value included in the radar data, selects detecting a radar echo signal including the first radar echo signal or selects detecting the radar transmit signal, including the first radar transmit signal.
11. A radar according to any preceding item, wherein the radar data includes channel data associated with one or more radar antenna channel elements; and wherein the radar antenna includes an array of antenna elements each coupled to the radar radio via the frontend for individually transmitting radar signals corresponding to the channels included in a radar transmit signal.
12. A radar according to any preceding item, wherein the radar is configured to detect microwave signals, via the radar antenna (101);
   wherein the radar radio includes a converter configured to convert the detected microwave signals into echo values, including converting a first microwave echo signal into first echo values;
   wherein the first processor (103) is configured to transfer the echo values from the radar radio to the data network interface (130); and
   wherein the data network interface (130) is configured to communicate the echo values including the first echo values in one or more first output data items included in one or more first output data packets included in a sequence of output data packets to the data network.
13. A radar according to any preceding item, wherein the one or more first input data items include a first identifier value enabling identifying the one or more first data items in a sequence of data items including the first data items;
   wherein the data network interface (120) is configured to obtain the first identifier value from the one or more first input data items and include the first identifier value (z) or a value corresponding with the first identifier value in the one or more first output data items included in one or more first output data packets.
14. A radar according to any preceding item, including:
   a motion system (601) configured to rotate the radar antenna (101); wherein the first processor (103) is configured to obtain from the motion system (601) an azimuth value corresponding to a current orientation of the radar antenna (101); and wherein the first processor (103) is configured to include a value corresponding to the azimuth value in an output data package.
15. A radar according to any preceding item, wherein the first processor (103) is configured to perform operations including the radar operations performed by the radar radio based on a static task schedule; and/or wherein the first processor (103) is configured to perform stateless processing.
16. A radar according to any preceding item, wherein the radio circuit and the data network interface is integrated on a first semiconductor substrate; wherein the synchronous transfer of the first radar data from the dequeuing circuit (115) to the radar radio (117) takes place via an on-chip interconnect.
17. A radar according to any preceding item, wherein the queuing circuit (113) is synchronized to the data network (140).
18. A radar according to any preceding item, wherein the first processor (103) and/or the radar radio is configured to obtain a second value from the one or more input data items and perform at least a subset of the first radar operations repeatedly, a number of times determined from the second value.
19. A radar according to any preceding item, wherein the data network interface (120) is configured to:
   determine, at a first point in time, a memory fill level corresponding to the number of data items stored in the memory (114) at the first point in time; and
   communicate the memory fill level, determined at the first point in time, via the data network (140) to a remote processor (130).
20. A radar according to any preceding item, wherein the first radar operations include:
   transmitting a first radar transmit signal via the radar antenna (101) in correspondence with the first radar data;
   receiving a first radar echo signal via the radar antenna in correspondence with the first radar data;
   wherein the radar radio includes a converter configured to convert the first radar echo signal into first echo values;
   wherein the first processor (103) is configured to transfer the first echo values from the radar radio to the data network interface (130);
   wherein the first processor (103) is configured to generate one or more time-stamp values associated with transmitting the first radar transmit signal and associated with receiving the first radar echo signal; and
   wherein the data network interface (130) is configured to communicate the first echo values and the one or more time-stamp values in one or more first output data items included in one or more first output data packets included in a sequence of output data packets to the data network.
21. A radar according to any preceding item, wherein the radar is configured to perform radar operations including:
   pulse radar operations; and/or
   pulse-Doppler radar operations; and/or
   pulse compression; and/or
   pulse compression with linear frequency modulation; and/or
   pulse compression with non-linear frequency modulation; and/or
   pulse compression with phase modulation.
22. A radar according to any preceding item, wherein the radar is configured to perform radar operations including:
   Frequency Modulated Continuous Wave (FMCW) radar operations; and/or
   Frequency-Modulated Interrupted Continuous-Wave (FMiCW) radar operations;
   Pulse-shaped amplitude modulation radar operations; and/or
   Multiple-input multiple-output (MIMO) radar operations.
23. A system, comprising:
   a radar according to any preceding item;
   a second processor (141) separate from the first processor (103);
   wherein the second processor (141) is configured to generate the radar data including the first radar data; and
   wherein the system includes a control computer (140) in communication with the second processor; wherein the control computer (140) and/or the second processor (141) is configured to communicate the radar data including the first radar data to the first processor (102) via the data network (130) and the memory (114).
24. A system according to item 23, wherein the control computer and/or the second processor are/is configured to include identifier values in data items transmitted to the first processor; wherein the identifier values enable identifying one or more first data items in a sequence of data items;
   wherein the first processor is configured to loop-back identifier values in data items transmitted to the control computer and/or the second processor;
   wherein the control computer and/or the second processor are/is configured to control a rate and/or timing of transmitting data items to the first processor based on the identifier values included in transmitted data items and based on the identifier values included in received data items.
25. A system according to any item 23 to 24, comprising a data store integrated in communication with the data network interface; wherein output data packets include time information and/or timing information; and wherein the output data packets are stored in the data store.
26. A system according to any item 23 to 25, wherein the control computer includes a data network interface, a central processing unit, a memory, and a user interface; wherein the control computer is loaded with an operating system and a radar application configured to generate radar data and/or analyse radar echo values.
27. A system according to any item 23 to 26, wherein the control computer is coupled with the second processor to control the second processor to communicate the data packets, including the radar data, to the first processor; wherein the control computer is coupled to the second processor via a data network.
28. A system according to any item 23 to 27, wherein the control computer and/or the second processor are/is based on a dynamic task schedule and runs a software-based operating system.
29. A system according to any item 23 to 28, including multiple radars according to any claim 1-22; wherein the control computer and/or the second processor is configured to communicate radar data and/or radar response data with one or more of the multiple radars.
30. A method at a first processor (103) coupled to a radar antenna (101) and including: a synchronizer (110); a radar radio (117); and a data network interface (111) including a memory (114); comprising:
   receiving, via a packet-switched data network, in advance of a first interval time, one or more first input data packets;
   storing, in the memory (114), one or more first data items including radar data including first radar data obtained from the one or more first input data packets; and
   synchronously, retrieving the first radar data from the memory (114) and synchronously transferring the radar data including the first radar data from the memory (114) to the radar radio (117); and
   at the radar radio, executing radar radio operations in correspondence with radar data synchronously transferred to the radar radio.
31. A method according to item 30, wherein the radar radio (117) performs the first radar operations including:
   transmitting a first radar transmit signal via the radar antenna (101) and a frontend circuit (102) in correspondence with the first radar data, and/or
   receiving a first radar echo signal via the radar antenna and the frontend circuit in correspondence with the first radar data.
32. A method according to any item 30 to 31, wherein the radar data includes control parameters; and wherein the radar radio (117) performs:
   transmission of the first radar transmit signal based on values included in the control parameters; and/or
   detection of the first radar echo signal based on values included in the control parameters.
33. A method according to any item 30 to 32, wherein the radar data includes one or more control parameters and/or transmission data; comprising:
   performing the radar operations corresponding to the radar data for an interval time; wherein the duration of the interval time corresponds to the radar data and is determined based on: one or more of the control parameters and/or a transmission time associated with the transmission data.
34. A method according to any item 30 to 33, wherein first radar operations corresponding to one or more first data items are performed during a first interval time; wherein second radar operations corresponding to one or more second data items are performed during a second interval time immediately after the first interval time; comprising:
   performing the second radar operations in response to beginning receiving the one or more second data items; and/or
   performing the first radar operations in response to beginning receiving the one or more first data items.
35. A method according to any item 30 to 34, wherein first radar operations corresponding to one or more first data items are included in a first complete set of first data items and are performed during a first interval time; comprising:
   making a first determination that each first data item included in the first complete set of first data items is currently stored in the first memory (114); and
   in response to the first determination, synchronously retrieving the one or more first data items included in the first complete set of first data items from the memory (114) and synchronously transfer the one or more first data items included in the first complete set of first data items including the first radar data from the dequeuing circuit (115) to the radar radio (117) for the radar radio (117) to perform the radar operations corresponding with the first radar data.
36. A method according to any item 30 to 35, wherein the radar data includes transmission data; and wherein the radar radio (117) shapes a signal waveform included in the first radar signal based on the transmission data.
37. A method according to any item 30 to 36, wherein frontend circuit (102) includes one or more of: a receive circuit; a transmit circuit; and a switch;
   wherein the radar radio controls the frontend circuit, including one or more of: the receive circuit; the transmit circuit; and the switch.
38. A method according to any item 30 to 37, wherein the first radar operations include transmitting a first radar transmit signal via the radar antenna (101) and the frontend circuit (102) in correspondence with the first radar data;
   wherein the radar includes a power amplifier for transmitting a radar transmit signal; and
   wherein the radar radio, based on a gate signal value included in the radar data, controls an operating time of the power amplifier.
39. A method according to any item 30 to 38, wherein the radar radio (117) performs the first radar operations including:
   transmitting the first interval time, a first radar transmit signal via the radar antenna (101) and the frontend circuit (102) in correspondence with the first radar data, and
   receiving a first radar echo signal via the radar antenna and the frontend circuit in correspondence with the first radar data;
   wherein the radar includes one or more analogue-to-digital converters selectively detecting: a radar echo signal including a first radar echo signal and/or the radar transmit signal, including a first radar transmit signal;
   wherein the radar radio, based on a switch delay value included in the radar data, selects detecting a radar echo signal including the first radar echo signal or selects detecting the radar transmit signal, including the first radar transmit signal.
40. A method according to any item 30 to 39, wherein the radar data includes channel data associated with one or more radar antenna channel elements; and wherein the radar antenna includes an array of antenna channel elements each coupled to the radar radio via the frontend, comprising:
   transmitting radar signals individually corresponding to the channels included in a radar transmit signal.
41. A method according to any item 30 to 40, wherein the radar is configured to detect microwave echo signals via the radar antenna (101) and the frontend circuit (102); comprising:
   converting the microwave echo signals into echo values, including converting a first microwave echo signal into first echo values;
   transferring the echo values from the radar radio to the data network interface (130); and
   communicating the echo values including the first echo values in one or more first output data items included in one or more first output data packets included in a sequence of output data packets to the data network.
42. A method according to item 41, wherein the one or more first input data items include a first identifier value enabling identifying the one or more first data items in a sequence of data items including the first data items; comprising:
   obtaining, at the first processor, the first identifier value from the one or more first input data items and include the first identifier value or a value corresponding with the first identifier value in the one or more first output data items included in one or more first output data packets.
43. A method according to any item 30 to 42, including a motion system () configured to rotate the radar antenna (101); comprising
   obtaining, at the first processor, from the motion system, an azimuth value corresponding to a current orientation of the radar antenna (101); and
   including a value corresponding to the azimuth value in an output data package.
44. A method according to any item 30 to 43, comprising:
   performing, at the first processor, operations including the radar operations based on a static task schedule; and/or
   performing, at the first processor, operations including the radar operations based on stateless processing.
45. A method according to any item 30 to 44, wherein the radio circuit and the data network interface is integrated on a first semiconductor substrate; comprising:
   performing the synchronous transfer of the first radar data from the dequeuing circuit (115) to the radar radio (117) via an on-chip interconnect.
46. A method according to any item 30 to 45, comprising synchronizing the queuing circuit (113) to the data network (140).
47. A radar according to any item 30 to 46, comprising:
   obtaining a second value from the one or more input data items; and
   performing at least a subset of the first radar operations repeatedly, a number of times determined from the second value.
48. A method according to any item 30 to 47, comprising at the first processor:
   determining a memory fill level at the first processor; and
   communicating the memory fill level via the data network (140) to a control computer (140).
49. A method according to any item 30 to 48, wherein the synchronizer includes a system clock; comprising at the first processor:
   determining a phase-difference measurement value based on the system clock; wherein the phase-difference measurement value represents a Doppler-shift associated with the echo pulse; and
   communicating the phase-difference measurement value in an output data item.
50. A method according to any item 30 to 49, comprising performing radar operations including:
   pulse radar operations; and/or
   pulse-Doppler radar operations; and/or
   pulse compression; and/or
   pulse compression with linear frequency modulation; and/or
   pulse compression with non-linear frequency modulation; and/or
   pulse compression with phase modulation.
51. A method according to any item 30 to 50, comprising performing radar operations including:
   Frequency Modulated Continuous Wave (FMCW) radar operations; and/or
   Frequency-Modulated Interrupted Continuous-Wave (FMiCW) radar operations; and/or
   Pulse-shaped amplitude modulation radar operations.
52. A first processor configured to be coupled to a radar antenna, comprising:
   a first processor (103) including: a synchronizer (110); a radar radio (117); and a data network interface (111) for communication via a data network (130);
   wherein the radar radio (117) is configured to perform radar radio operations in correspondence with radar data synchronously transferred to the radar radio; wherein the radar data includes first radar data corresponding to first radar operations;
   wherein the data network interface (120) includes:
      a first memory (114);
      a queuing circuit (113) configured to store, in the first memory (114), one or more input data items obtained from one or more input data packets received via the data network (130); wherein the one or more input data items include one or more first input data items; wherein the one or more first input data items include first radar data; and
      a dequeuing circuit (115) controlled via the synchronizer to synchronously retrieve the one or more input data items from the memory (114) and synchronously transfer the one or more input data items including the first radar data from the dequeuing circuit (115) to the radar radio (117) for the radar radio (117) to perform the radar operations corresponding with the first radar data.

Aspects of item 52 are set out in items 1 to 51.

Generally, in this disclosure, the terms "asynchronous" and "non-synchronous" are used interchangeably to describe events or processing steps that do not rely on a clock from the synchronizer. Both terms refer to independent timing of events or processing steps rather than dependent timing of triggers or processing steps being driven by a synchronizer. The synchronizer controls the processor to perform processing in synchronism with a central clock signal to synchronize the flow of data and processing steps. The central clock signal initiates data transfers at specific intervals, ensuring precise timing and coordination.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

## Claims

1. A radar, comprising:
a radar antenna (101);
a frontend circuit (102) coupled to the radar antenna (101) and including one or more amplifiers;
a first processor (103) coupled to the frontend circuit (102) and including: a synchronizer (110); a radar radio (117); and a data network interface (111) for communication via a data network (130);
wherein the radar radio (117) is configured to perform radar radio operations in correspondence with radar data synchronously transferred to the radar radio; wherein the radar data includes first radar data corresponding to first radar operations;
wherein the data network interface (120) includes:
a first memory (114);
a queuing circuit (113) configured to store, in the first memory (114), one or more input data items obtained from one or more input data packets received via the data network (130); wherein the one or more input data items include one or more first input data items; wherein the one or more first input data items include first radar data; and
a dequeuing circuit (115) controlled via the synchronizer to synchronously retrieve the one or more input data items from the memory (114) and synchronously transfer the one or more input data items including the first radar data from the dequeuing circuit (115) to the radar radio (117) for the radar radio (117) to perform the radar operations corresponding with the first radar data.

2. A radar according to any preceding claim, wherein the radar radio (117) is configured to perform the first radar operations including:
transmitting a first radar transmit signal via the radar antenna (101) and the frontend circuit (102) in correspondence with the first radar data, and/or
receiving a first radar echo signal via the radar antenna and the frontend circuit in correspondence with the first radar data.

3. A radar according to any preceding claim, wherein the radar data includes control parameters; and wherein the radar radio (117) is configured to control:
transmission of a first radar transmit signal based on values included in the control parameters; and/or
detection of a first radar echo signal based on values included in the control parameters.

4. A radar according to any preceding claim, wherein the radar data includes one or more control parameters and/or transmission data; wherein the radar radio (117) is configured to perform the radar operations corresponding to the radar data for an interval time; wherein the duration of the interval time corresponds to the radar data and is determined based on: one or more of the control parameters and/or a transmission time associated with the transmission data.

5. A radar according to any preceding claim, wherein the first radar operations corresponding to one or more first data items are performed during a first interval time; wherein second radar operations corresponding to one or more second data items are performed during a second interval time after the first interval time; and
wherein the radar radio is configured to proceed to perform the second radar operations in response to beginning receiving the one or more second data items; and/or
wherein the radar radio is configured to perform the first radar operations in response to beginning receiving the one or more first data items.

6. A radar according to any preceding claim, wherein the first radar operations corresponding to one or more first data items are included in a first complete set of first data items and are performed during a first interval time;
wherein the dequeuing circuit (115) is configured to:
make a first determination that each first data item included in the first complete set of first data items is currently stored in the first memory (114); and
in response to the first determination, synchronously retrieving the one or more first data items included in the first complete set of first data items from the memory (114) and synchronously transfer the one or more first data items included in the first complete set of first data items including the first radar data from the dequeuing circuit (115) to the radar radio (117) for the radar radio (117) to perform the radar operations corresponding with the first radar data.

7. A radar according to any preceding claim, wherein the radar data includes transmission data; and wherein the radar radio (117) is configured to shape a signal waveform included in the first radar signal based on the transmission data.

8. A radar according to any preceding claim, wherein the first radar operations include transmitting a first radar transmit signal via the radar antenna (101) and the frontend circuit (102) in correspondence with the first radar data;
wherein the radar includes a power amplifier for transmitting a radar transmit signal; and
wherein the radar radio, based on a gate amplifier.

9. A radar according to any preceding claim, wherein the radar radio (117) is configured to perform the first radar operations including:
transmitting, within a first interval time, a first radar transmit signal via the radar antenna (101) and the frontend circuit (102) in correspondence with the first radar data, and
receiving, within the first interval time, a first radar echo signal via the radar antenna and the frontend circuit in correspondence with the first radar data;
wherein the radar includes one or more analogue-to-digital converters selectively detecting: a radar echo signal including a first radar echo signal and/or the radar transmit signal, including a first radar transmit signal;
wherein the radar radio, based on a switch delay value included in the radar data, selects detecting a radar echo signal including the first radar echo signal or selects detecting the radar transmit signal, including the first radar transmit signal.

10. A radar according to any preceding claim, wherein the radar data includes channel data associated with one or more radar antenna channel elements; and wherein the radar antenna includes an array of antenna elements each coupled to the radar radio via the frontend for individually transmitting radar signals corresponding to the channels included in a radar transmit signal.

11. A radar according to any preceding claim, wherein the radar is configured to detect microwave signals, via the radar antenna (101);
wherein the radar radio includes a converter configured to convert the detected microwave signals into echo values, including converting a first microwave echo signal into first echo values;
wherein the first processor (103) is configured to transfer the echo values from the radar radio to the data network interface (130); and
wherein the data network interface (130) is configured to communicate the echo values including the first echo values in one or more first output data items included in one or more first output data packets included in a sequence of output data packets to the data network.

12. A radar according to any preceding claim, wherein the one or more first input data items include a first identifier value enabling identifying the one or more first data items in a sequence of data items including the first data items;
wherein the data network interface (120) is configured to obtain the first identifier value from the one or more first input data items and include the first identifier value (z) or a value corresponding with the first identifier value in the one or more first output data items included in one or more first output data packets.

13. A radar according to any preceding claim, wherein the first processor (103) and/or the radar radio is configured to obtain a second value from the one or more input data items and perform at least a subset of the first radar operations repeatedly, a number of times determined from the second value.

14. A radar according to any preceding claim, wherein the first radar operations include:
transmitting a first radar transmit signal via the radar antenna (101) in correspondence with the first radar data;
receiving a first radar echo signal via the radar antenna in correspondence with the first radar data;
wherein the radar radio includes a converter configured to convert the first radar echo signal into first echo values;
wherein the first processor (103) is configured to transfer the first echo values from the radar radio to the data network interface (130);
wherein the first processor (103) is configured to generate one or more time-stamp values associated with transmitting the first radar transmit signal and associated with receiving the first radar echo signal; and
wherein the data network interface (130) is configured to communicate the first echo values and the one or more time-stamp values in one or more first output data items included in one or more first output data packets included in a sequence of output data packets to the data network.

15. A system, comprising:
a radar according to any preceding claim;
a second processor (141) separate from the first processor (103);
wherein the second processor (141) is configured to generate the radar data including the first radar data; and
wherein the system includes a control computer (140) in communication with the second processor; wherein the control computer (140) and/or the second processor (141) is configured to communicate the radar data including the first radar data to the first processor (102) via the data network (130) and the memory (114).

16. A method at a first processor (103) coupled to a radar antenna and including: a synchronizer (110); a radar radio (117); and a data network interface (111) including a memory (114);
comprising:
receiving, via a packet-switched data network, in advance of a first interval time, one or more first input data packets;
storing, in the memory (114), one or more first data items including radar data including first radar data obtained from the one or more first input data packets; and
synchronously, retrieving the first radar data from the memory (114) and synchronously transferring the radar data including the first radar data from the memory (114) to the radar radio (117); and
at the radar radio, executing radar radio operations in correspondence with radar data synchronously transferred to the radar radio.
